# EUROPEAN PATENT APPLICATION

(11) **EP 4 683 142 A1**
(43) Date of publication of application: **21.01.2026**
(21) Application number: 24189487.2
(22) Date of filing: 18.07.2024
(51) Int. Cl.: H02G 3/32

(54) **SLEEVE ASSEMBLY FOR SURROUNDING A CABLE ASSEMBLY**

(71) Applicant: CMP Products Limited, St Peters Newcastle upon Tyne Tyne and Wear NE6 1BS (GB)
(72) Inventor: The designation of the inventor has not yet been filed
(74) Representative: Murgitroyd & Company

(57) **Abstract**

A sleeve assembly 2 for surrounding a cable assembly 4 to enable mounting of said cable assembly 4 in a cable cleat 6 is described. The sleeve assembly 2 comprises a cable surround element 8 which is configured to be wrapped around a plurality of cables in a cable assembly 4 in use to enclose said cable assembly 4. The sleeve assembly further has an elongate tensioning element 10 configured to be tightened around said cable surround element 8. A ratcheting element 12 is provided that is configured to receive said elongate tensioning element 10 to enable said elongate tensioning element 10 to be tightened around said cable surround element 8 to secure said cable surround element 8 around said cable assembly 4.

## Description

The present disclosure relates to a sleeve assembly for surrounding a cable assembly to enable mounting of said cable assembly in a cable cleat.

Triplex cable is an assembly of three helically wound electrical cables. The cables are twisted around each other along the length of the assembly for purposes of thermal and magnetic field management. However, the helical winding means that the outer shape of the triplex cable assembly continually varies along its longitudinal axis making the cable assembly difficult to mount in existing cable cleats.

GB2389970B attempts to address this problem. A cable surround formed from three interlocking sections is disclosed. The interlocking sections are each shaped to fit around a cable of a trefoil cable assembly. Each interlocking section is provide with projections and recesses formed to enable the interlocking sections to be resiliently fitted together to surround the cable. The recesses are elongate such that the projections can slide along the recess to enable the surround to be manoeuvred into place around all three cables and then tightened. The tightened surround can then be slid into a circular cleat and the cleat tightened.

The cable surround of GB2389970B suffers from the drawback that since the projections can slide in the recesses, if once tightened around the cable assembly, the user lets go of the interlocking sections, they can become loose. This can happen any time for example the user lets go of the cable surround to obtain a torque wrench to tighten the cleat in which the surround is installed.

The cable surround of GB2389970B also suffers from the drawback that the projections of the individual interlocking sections can easily snap off which renders the various surround unusable.

A preferred embodiment of the present disclosure seeks to overcome the above mentioned disadvantages of the prior art.

According to an aspect of the present disclosure, there is provided a sleeve assembly for surrounding a cable assembly to enable mounting of said cable assembly in a cable cleat, the sleeve assembly comprising:
a cable surround element configured to be wrapped around a plurality of cables in a cable assembly in use to enclose said cable assembly;
an elongate tensioning element configured to be tightened around said cable surround element; and
a ratcheting element configured to receive said elongate tensioning element to enable said elongate tensioning element to be tightened around said cable surround element to secure said cable surround element around said cable assembly.

By providing an elongate tensioning element configured to be tightened around said cable surround element and a ratcheting element configured to receive the elongate tensioning element to enable the elongate tensioning element to be tightened around the cable surround element, this provides the advantage that the cable surround element can be tightened around a cable assembly by threading the elongate tensioning element into the ratcheting element and the cable surround element cannot then become loose. This means that a user can perform another task before having to come back and mount the sleeve assembly in a cable cleat. This is particularly advantageous for example when a user must obtain a torque wrench to tighten a cable cleat and does not want to have to re-tighten the cable surround element.

This also provides the advantage that nothing other than the elongate tensioning element is required to assemble individual elements forming the cable surround element together. This simplifies manufacture of the assembly and reduces the likelihood of parts breaking causing failure.

The cable surround element may comprise a plurality of cuff members, each said cuff member comprising a recess configured to receive an outer surface of a cable of said cable assembly.

This provides the advantage of a straightforward means of manufacturing a cable surround element. The number of cuff elements can be chosen to match the number of cables in an assembly to be surrounded, the cuff elements merely having to be connected together by use of an elongate tensioning element

Additionally, each said cuff member may comprise a tongue portion configured to slide under an adjacent cuff member as said elongate tensioning element is tightened around said cable surround element.

This provides the advantage of ensuring that when the cable surround element is tightened, the compression placed on the cable assembly is uniform and the tightening of the cuff members such that they slide together is also uniform.

Each said cuff member may further comprise at least one eye portion configured to threadably receive said elongate tensioning element.

This provides the advantage that the elongate tensioning element can be used to hold the assembly together such that the assembly is effectively a single part for a user to handle, rather than having to assemble multiple parts together. This significantly increases ease of use for the user.

Each said cuff member may comprise a channel portion configured to receive said elongate tensioning element.

This provides advantage of facilitating uniform tightening of the assembly.

The elongate tensioning element may be formed from a toothed tape portion of a cable tie and the ratcheting element may be formed from a pawl and pawl housing of said cable tie configured to ratchet said toothed tape portion.

This provides the advantage of a readily available part to be used in the assembly which significantly simplifies and reduces cost of manufacture.

A preferred embodiment of the present disclosure will now be described, by way of example only and not in any limitative sense, with reference to the accompanying drawings, in which:
Figure 1 is a perspective view of a sleeve assembly embodying the present disclosure for surrounding a cable assembly to enable mounting of said cable assembly in a cable cleat, the sleeve assembly shown in its unwrapped configuration;
Figure 2 is a side view of the assembly of Figure 1 shown in its wrapped configuration;
Figure 3 is a cross sectional view taken along line A-A of Figure 2;
Figure 4a is a perspective view of the apparatus of Figure 1 in its wrapped configuration, wherein the elongate tensioning element is shown in the configuration before being tightened;
Figure 4b is a perspective view corresponding to Figure 4a, tightened in the ratcheting element;
Figure 4c is a perspective view corresponding to Figure 4a, in which the elongate tensioning element has been trimmed;
Figure 5a is a top view of a triplex cable assembly;
Figure 5b is a perspective view corresponding to Figure 5a;
Figure 6a is a perspective view from an underside of a cuff member forming the assembly of Figure 1;
Figure 6b is a rear view of the cuff member corresponding to Figure 6a;
Figure 6c is a top view of the cuff member corresponding to Figure 6a;
Figure 6d is a side view of the cuff member corresponding to Figure 6a;
Figure 6e is a bottom view of the cuff member corresponding to Figure 6a;
Figure 6f is a top down perspective view of the cuff member corresponding to Figure 6a;
Figure 6g is a front view of the cuff member corresponding to Figure 6a;
Figure 7a is a front view of the sleeve assembly of Figure 1 shown installed in a cable cleat at a first location along the length of a triplex cable assembly;
Figure 7b is a bottom view corresponding to Figure 7a;
Figure 7c is a cross-sectional view taken along line B-B of Figure 7b;
Figure 8a is a front view of the sleeve assembly of Figure 1 shown installed in a cable cleat at a second location compared with Figures 7a to 7c along the length of a triplex cable assembly;
Figure 8b is a bottom view corresponding to Figure 8a;
Figure 8c is a cross-sectional view taken along line C-C of Figure 8b;
Figure 9a is a front view of the sleeve assembly of Figure 1 shown installed in a cable cleat at a third location compared with Figures 7a to 7c along the length of a triplex cable assembly;
Figure 9b is a bottom view corresponding to Figure 9a; and
Figure 9C is a cross-sectional view taken along line D-D of Figure 9b.

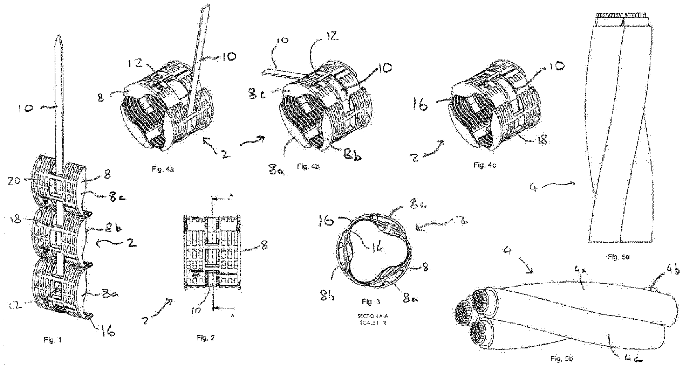

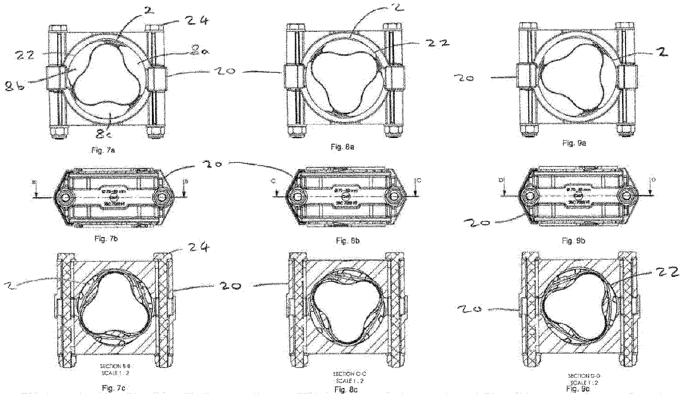

Referring to Figures 1 to 5a and 7a, a sleeve assembly 2 for surrounding a cable assembly 4 to enable mounting of the cable assembly 4 in a cable cleat 6 (Figure 7a) is provided. The sleeve assembly 2 comprises a cable surround element 8 configured to be wrapped around a plurality of cables 4a, 4b and 4c in cable assembly 4 to enclose the cable assembly 4.

Sleeve assembly 4 also comprises an elongate tensioning element 10 configured to be tightened around the cable surround element 8 and a ratcheting element 12 configured to receive the elongate tensioning element 10 to enable the elongate tensioning element 10 to be tightened around the cable surround element 8 to secure the cable surround element 8 around the cable assembly 4.

In the embodiment shown, the cable surround element 8 is formed from a plurality of cuff members 8a, 8b and 8c, in this embodiment three cuff members to surround a triplex cable assembly 4 formed from three helically wound cables 4a, 4b and 4c. However, cable assemblies of fewer or more individual cables could be accommodated by sleeve assembly 2 by increasing or decreasing the number of cuff members 8a. The cuff members may be formed from an injection moulded plastics material.

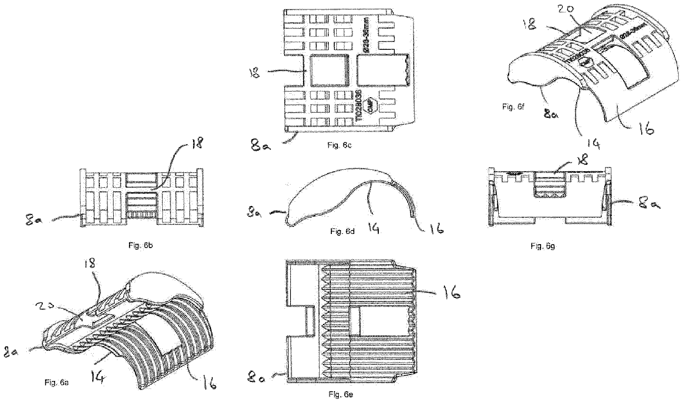

Referring to Figures 6a to 6g, each cuff member 8a comprises a recess 14 configured to receive an outer surface of a cable 4a of cable assembly 4. Each cuff member 8a also comprises a tongue portion 16 configured to slide under an adjacent cuff member as the elongate tensioning element 10 is tightened around the cuff members 8a, 8b and 8c. This ensures uniform and even tightening.

Each cuff member 8a also comprises at least one eye portion 18 configured to threadably receive the elongate tensioning element 10 and defines a channel portion 20 configured to guide the elongate tensioning element 10. By threading the elongate tensioning element 10 through an eye portion 18 of each cuff member 8a, 8b and 8c, the sleeve assembly 2 is effectively one part for a user requiring no assembly. The cuff members 8a, 8b and 8c are prevented from falling off the elongate tensioning member by abutment of eye portion 18 of the lowermost cuff member 8a in Figure 1 against ratcheting element 12.

In the embodiment shown, the elongate tensioning element 10 is formed from a toothed tape portion of a cable tie and the ratcheting element 12 is formed from a pawl and pawl housing of the cable tie. Cable ties are generally formed from a single piece of moulded nylon which has a flexible tape section 10 with teeth (not shown) that engage with a pawl in the head 12 to form a ratchet so that as the tape section 10 is pulled thorough pawl 12 the cable tie tightens and cannot be loosened. Cable ties are also known as zipper ties, zip ties, wire ties, wire wraps, mouse belts, hose ties or rat belts.

Referring to Figures 1 to 5b, the operation of securing sleeve assembly 2 around a cable assembly 4 will now be described.

The sleeve assembly 2 is taken in the unwrapped configuration of Figure 1 and wrapped around cable assembly 4 by locating each individual cable 4a, 4b and 4c in a corresponding recess 14 of a cuff member 8a, 8b and 8c. This wraps the sleeve assembly 2 into the configuration of Figures 2 to 4. Elongate tensioning element 10 can then be threaded through ratcheting element 12 as shown in moving from Figures 4a to 4b and pulled to tighten the cuff members 8a, 8b and 8c around the cable assembly 4.

Once tightened, the sleeve assembly 2 has a substantially circular outer shape as best shown in Figure 3. The part of elongate tensioning member 10 projecting out of ratcheting element 12 can be cut off.

Referring now to Figures 7a to 9c, Cable cleat 20 has a circular aperture 22 shaped to receive sleeve assembly 2 wrapped around cable assembly 4 (not shown). Cleat 20 locks around sleeve assembly 2 by means of bolts 24 or other fastening elements.

Comparing Figures 7a, 8a and 9a, no matter at which position the sleeve assembly 2 along the length of cable assembly 4, the particular helical wound cross section at that part of cable assembly 4 can be accommodated and the wrapped sleeve assembly 2 will still always form a circular outer diameter for ready mounting in cleat 20.

By using elongate tensioning member 10 and ratcheting element 12, the user can simply tighten the sleeve around cable assembly 4 in the knowledge that the sleeve assembly 2 will not come loose even if the user lets go for example to obtain a wrench to tighten bolts 24 of cleat 20.

Whilst cable surround element 8 of sleeve assembly 2 has been described as an assembly of three cuff members 8a, 8b and 8c, a cable surround element 8 formed from a single part, such as a single piece of foam, could also be used. Ratcheting elements rather than cable ties could also be used, for example a belt and a buckle.

It will be appreciated by persons skilled in the art that the above embodiment has been described by way of example only and not in any limitative sense, and that various alterations and modifications are possible without departure from the scope of protection as defined by the appended claims.

## Claims

1. A sleeve assembly for surrounding a cable assembly to enable mounting of said cable assembly in a cable cleat, the sleeve assembly comprising:
a cable surround element configured to be wrapped around a plurality of cables in a cable assembly in use to enclose said cable assembly;
an elongate tensioning element configured to be tightened around said cable surround element; and
a ratcheting element configured to receive said elongate tensioning element to enable said elongate tensioning element to be tightened around said cable surround element to secure said cable surround element around said cable assembly.

2. An assembly according to claim 1, wherein the cable surround element comprises a plurality of cuff members, each said cuff member comprising a recess configured to receive an outer surface of a cable of said cable assembly.

3. An assembly according to claim 2, wherein each said cuff member comprises a tongue portion configured to slide under an adjacent cuff member as said elongate tensioning element is tightened around said cable surround element.

4. An assembly according to claim 2 or 3, wherein each said cuff member comprises at least one eye portion configured to threadably receive said elongate tensioning element.

5. An assembly according to any one of claims 2 to 4, wherein each said cuff member comprises a channel portion configured to receive said elongate tensioning element.

6. A sleeve assembly according to any one of the preceding claims, wherein the elongate tensioning element is formed from a toothed tape portion of a cable tie and the ratcheting element is formed from a pawl and pawl housing of said cable tie configured to ratchet said toothed tape portion.
